# EUROPEAN PATENT SPECIFICATION

(11) **EP 3 722 110 B1**
(45) Date of publication and mention of the grant of the patent: **27.04.2022**
(21) Application number: 20167814.1
(22) Date of filing: 02.04.2020
(51) Int. Cl.: B60C 11/16

(54) **TIRE TREAD WITH STUD ARRANGEMENT**
REIFENLAUFFLÄCHE MIT SPIKE-ANORDNUNG
BANDE DE ROULEMENT DE PNEU COMPORTANT UN AGENCEMENT DE CLOU

(30) Priority: 09.04.2019 US 201916379007
(43) Date of publication of application: 14.10.2020
(73) Proprietor: The Goodyear Tire & Rubber Company, Akron, OH 44316 (US)
(72) Inventor: PONS, Frederic Michel-Jean, F-57100 Thionville (FR)
(74) Representative: Kutsch, Bernd

(56) References cited:
- WO-A2-02/078980
- DE-A1- 2 143 019
- JP-A- 2012 176 700
- US-A- 4 844 137

## Description

### Field of Invention

The present invention relates to stud pins installed in a tread portion of a tire, preferably a pneumatic tire, and, more particularly, to a stud pin arrangement in the tread portion.

### Background of the Invention

Conventional snow tires may be equipped with stud pins installed in the tread portion of the tire to allow the tire to grip an icy or snowy road surface. A stud pin may be embedded into a stud pin installation hole provided in the tread portion of the tire. The stud pin may broaden a pin bore and be tightly embedded therein so that the stud pin does not fall out of the stud pin installation hole due to braking, driving, or lateral and vertical forces received from the road surface while the tire is rotating.

The stud pin may have a pillar and a pin. The pillar may be fitted into a close-ended hole formed in the tread portion of the tire and thereby be secured to the tread surface. The pin protrudes radially outward from the pillar. The pillar may be asymmetrically and/or irregularly shaped as it extends radially outward from the tread portion.

When these studded snow tires are used on concrete or asphalt road surfaces not coved by snow or ice, these harder, bare road surfaces often dislodge the stud pins. Even for tires equipped with the above-mentioned stud pins, there are cases where the stud pins often fall out (pin drop) due to the forces on the tire while a vehicle is driving, braking, and/or cornering on a concrete or asphalt road. There will be a large amount of pin drop if there is any clawing force applied between the stud pin and the road surface. The clawing force may overcome the force retaining the stud pin in the tread rubber material of the tire. Therefore, there is a demand for further improvement regarding pin drop for these pneumatic stud tires, as well as the other performance characteristics of the stud pins (e.g., traction, durability, wear, etc.).

WO 02/078980 A2 describes a tire tread in accordance with the preamble of claim 1.

DE 21 43 019 A1 describes a tire stud having a body and a pin, the pin moving within the body with wear.

US 4,844,137 discloses a stud for a tire having a pin mounted in a plastic body. The body has a collapsible portion so that the stud can self-adjust its position relative to the tread surface as it wears.

### Summary of the Invention

The invention relates to a tire tread in accordance with claim 1 and to a tire in accordance with claim 11.

Dependent claims refer to preferred embodiments of the invention.

In accordance with a preferred aspect of the present invention, an arrangement of studs is inserted into a tread portion of a tire. The arrangement includes a plurality of first studs protruding from an unworn tread portion for contacting a road surface and a plurality of second studs embedded in the tread portion such that the second studs protrude from a worn tread portion as the tread portion wears against the road surface.

According to a preferred aspect of the invention, the first studs have a cylindrical stump portion.

According to one aspect of the invention, the first studs have radially outermost flat tip ends and the second studs have radially outermost spherical tip ends.

According to another aspect of the invention, the first studs have radially outermost spherical tip ends and the second studs have radially outermost flat tip ends.

According to a preferred aspect of the invention, a plurality of third studs are embedded in the tread portion such that the third studs protrude from the worn tread portion as the tread portion wears against the road surface, the third studs being embedded at a radial depth different from the second studs.

According to a preferred aspect of the invention, each of the second studs is embedded at a first radial depth of the tread portion and each of the third studs is embedded at a second radial depth of the tread portion, the first radial depth being less than the second radial depth.

In accordance with a preferred aspect of the present invention, a stud configuration for a tire tread includes a first plurality of studs disposed at a first radial depth of the tire tread, a second plurality of studs disposed at a second radial depth of the tire tread, and a third plurality of studs disposed at a third radial depth of the tire tread. The first radial depth is greater than the second radial depth and the second radial depth is greater than the third radial depth.

According to a preferred aspect of the invention, the first plurality of studs, the second plurality of studs, and the third plurality of studs each have a differing construction.

According to yet another preferred aspect of the invention, the first plurality of studs each have a tip end with a first size, the second plurality of studs each have a tip end with a second size, and the third plurality of studs each have a tip end with the first size, the first size being larger than the second size.

According to still another preferred aspect of said configuration, the first plurality of studs each have a tip end with a first size, the second plurality of studs each have a tip end with a second size, and the third plurality of studs each have a tip end with the first size, the second size being larger than the first size.

A stud for use with the present invention is configured to be inserted into a tread portion of a tire. In a preferred aspect, the stud includes a tip end protruding from the tread portion for contacting a surface, and a base preferably including a flanged bottom portion provided on an end opposite the tip end and extending radially outward, a stump portion provided between the bottom portion and the tip end, and a shank portion interconnecting the stump portion and the bottom portion. The base is embedded and secured in the tread portion of the tire in which the stud is installed. The bottom portion preferably has a tear-drop shape consisting of three planar sides and one semi-cylindrical side. The stump portion preferably has a polygonal shape consisting of three concave sides, two convex sides, and one planar side.

According to a preferred aspect of the stud, the tip end may have a hexagonal-like cross-sectional shape extending radially outward from a radially outermost surface of the stump portion of the base.

According to still another preferred aspect of the stud, the tip end may have a cross-section with three concave surfaces with three planar surfaces.

According to yet another preferred aspect of the stud, the cross-section of the stump portion may include a flat side circumferentially disposed between first and second concave hollows and two convex sides circumferentially separated by a third concave hollow.

According to still another preferred aspect of the stud, the cross-section of the stump portion may include a flat side circumferentially disposed between first and second concave hollows and first and second convex sides circumferentially separated by a third concave hollow. The first concave hollow is adjacent the first convex side and the second concave hollow is adjacent the second convex side.

According to yet another preferred aspect of the stud, the bottom portion may have a tear drop cross-section with three planar sides and one semi-cylindrical side.

According to still another preferred aspect of the stud, the shank portion may have a thinner cross-section compared to the bottom portion.

According to yet another preferred aspect of the stud, the shank portion may have a thinner cross-section compared to the trunk portion.

According to still another preferred aspect of the stud, the shank portion may have an oval-shaped cross-section.

According to yet another preferred aspect of the stud, the tip end may have a radially outermost surface with four generally planar surfaces converging to form an outer point for improving engagement of the stud with an ice surface.

A preferred first stud configuration for a tire tread in accordance with the present invention includes: a first plurality of studs disposed in a first region of the tire tread, the first plurality of studs each having a first orientation; a second plurality of studs disposed in a second region of the tire tread, the second plurality of studs each having a second orientation rotated +90 degrees relative to a radial axis; and a third plurality of studs disposed in a third region of the tire tread, the third plurality of studs each having a third orientation rotated -90 degrees relative to the radial axis.

According to a preferred aspect of the first stud configuration, the first plurality of studs, the second plurality of studs, and the third plurality of studs each have an identical construction.

According to still another preferred aspect of the first stud configuration, the first region is a shoulder portion of the tread portion, the second region is a center portion of the tread portion, and the third region is another shoulder portion of the tread portion.

According to yet another preferred aspect of the first stud configuration, the first plurality of studs each have a tip end with a first size, the second plurality of studs each have a tip end with a second size, and the third plurality of studs each have a tip end with the first size. The first size is larger than the second size.

According to still another preferred aspect of the first stud configuration, the first plurality of studs each have a tip end with a first size, the second plurality of studs each have a tip end with a second size, and the third plurality of studs each have a tip end with the first size. The second size is larger than the first size.

A second stud configuration for use with the present invention includes: a first plurality of studs disposed in a first region of the tire tread, the first plurality of studs each having a first orientation; a second plurality of studs disposed in a second region of the tire tread, the second plurality of studs each having a second orientation rotated +45 degrees relative to a radial axis; and a third plurality of studs disposed in a third region of the tire tread, the third plurality of studs each having a third orientation rotated -45 degrees relative to the radial axis.

According to a preferred aspect of the second stud configuration, the first plurality of studs, the second plurality of studs, and the third plurality of studs each have an identical construction.

According to another preferred aspect of the second stud configuration, the first region is a shoulder portion of the tread portion, the second region is a center portion of the tread portion, and the third region is another shoulder portion of the tread portion.

According to yet another preferred aspect of the second stud configuration, the first plurality of studs each have a tip end with a first size, the second plurality of studs each have a tip end with a second size, and the third plurality of studs each have a tip end with the first size. The first size is larger than the second size.

According to still another preferred aspect of the second stud configuration, the first plurality of studs each have a tip end with a first size, the second plurality of studs each have a tip end with a second size, and the third plurality of studs each have a tip end with the first size. The second size is larger than the first size.

In a preferred aspect of the invention, the radially outermost surfaces of the second studs are recessed in a range of from 0.5 to 3 mm, preferably 1 mm to 2 mm, in the radial direction of the tire versus the radially outermost surfaces of the first studs.

In a preferred aspect of the invention, the radially outermost surfaces of the third studs are recessed in a range of from 0.5 to 3 mm, preferably 1 mm to 2 mm, in the radial direction of the tire versus the radially outermost surfaces of the second studs.

In a preferred aspect of the invention, the first and second studs and, if present, the third studs, are arranged in a row or along a straight line. Such a row or straight line preferably comprises three studs or consists of two, three or four studs.

### Definitions

The following definitions are controlling for the present invention.

"Axial" and "Axially" means the lines or directions that are parallel to the axis of rotation of the tire.

"Circumferential" means circular lines or directions extending along the perimeter of the surface of the annular tread perpendicular to the axial direction.

"Equatorial Plane" means the plane perpendicular to the tire's axis of rotation and passing through the center of its tread; or the plane containing the circumferential centerline of the tread.

"Radial" and "radially" mean directions radially toward or away from the axis of rotation of the tire. A radial recess is measured from the unworn tread surface in the radial direction towards the axis of rotation of the tire,

### Brief Description of the Drawings

The present invention will be better understood through reference to the following description and the appended drawings, in which:
FIG. 1 schematically represents an external perspective view of a first stud.
FIG. 2 schematically represents an external perspective view of a second stud.
FIG. 3 schematically represents a radial orthographic view of a tread for use with an arrangement of the first and second studs of FIGS. 1 and 2 in accordance with the present invention.
FIG. 4 schematically represents a detailed radial orthographic view of another stud arrangement in accordance with the present invention.
FIG. 5 schematically represents a cross-sectional view of part of the stud arrangement of FIG. 4.
FIG. 6 schematically represents a cross-sectional view of another part of the stud arrangement of FIG. 4.

### Detailed Description of Example Embodiments of the Present Invention

The following is an explanation of a pneumatic or non-pneumatic tire assembly according to the present invention. The assembly may be similar to the pneumatic tire configurations disclosed in US-B-10,035,382 and US Patent Application Serial No. 16/166,207 filed on October 22, 2018.

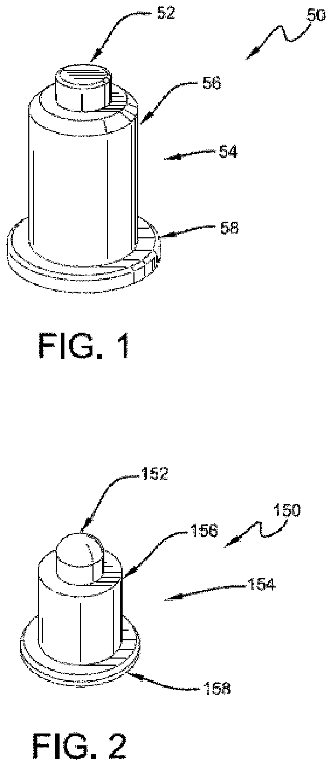

FIG. 1 of US-B-10,035,382 schematically represents a tire cross-sectional view illustrating a cross-section of a pneumatic tire. The pneumatic tire may be a tire with studs embedded in a tread portion of the pneumatic tire.

The tire circumferential direction explained hereafter refers to the rotation direction (both rolling directions) of a tread surface of a studded tire 10 about a tire rotation axis. The radial direction of the tire refers a direction radiating about a direction extending orthogonally to/from the tire rotation axis. The radially outer side of the studded tire 10 refers to the side away from the tire rotation axis in the radial direction of the studded tire. The tire width direction is a direction parallel to the tire rotational axis, and the outer side in the tire width direction refers to two sides away from a tire center line of the studded tire 10.

A studded tire 10, in accordance with the present invention, may include a carcass ply layer, a belt layer, and bead cores which serve as a frame for the studded tire.

The studded tire 10 includes a tread member 18, sidewall members and preferably also bead filler members, rim cushion members and an innerliner member around the frame for the studded tire.

The carcass ply layer may be formed in a toroidal shape wound between a pair of circular ring-shaped bead cores and may include rubber-coated organic fiber carcass ply members. The carcass ply layer may be configured from multiple carcass ply members or a single carcass ply member. The belt layer may be provided on the outer side in the tire radial direction of the carcass ply layer and configured from two belt members. The belt layer may be constructed of rubber-coated steel cords arranged at a predetermined angle, such as 20 to 30 degrees, relative to the tire circumferential direction. The inclination direction of the steel cords of the two layers of the belt members may be opposite each other.

The tread member 18 is disposed on an outer side in the tire radial direction of the belt layer. The sidewall members are connected to two sides of the tread member 18 to form two sidewalls. The tread member 18 may be configured from two layers of rubber, an upper tread member disposed on an outer side in the tire radial direction, and a lower tread member disposed on an inner side in the tire radial direction. The rim cushion members may be disposed at inner sides in the tire radial direction of the sidewall members and come into contact with a rim on which the studded tire 10 may be fitted. A bead filler material may be disposed between a portion of the carcass ply layer before the carcass ply layer is wound around the bead cores and a portion of the carcass ply layer. The innerliner member may be disposed on an inner surface of the studded tire 10 adjacent a tire cavity region that is filled with gas enclosed by the studded tire and the rim. The studded tire 10 may have this tire structure or any other suitable structure, pneumatic and/or non-pneumatic.

FIG. 1 shows an external perspective view of a first stud 50 for use with the present invention.

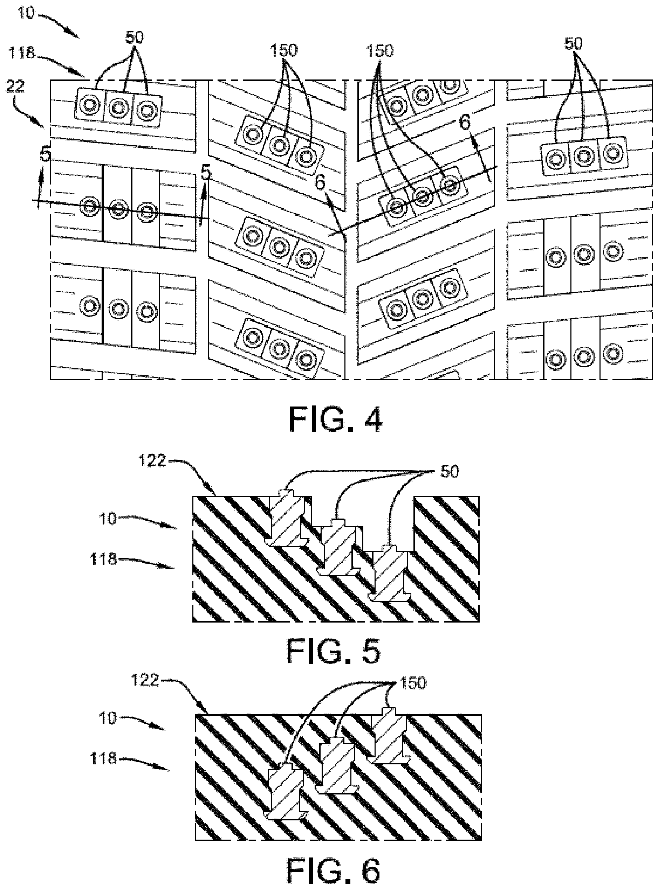

The first stud 50 includes a radially outer flat tip end 52 and a base 54 for partially inserting into corresponding recesses in the tread member 18. The base 54 is thus partially embedded inside a stud pin installation hole in the tread portion 18 of the studded tire 10 in which it is installed. The first stud 50 is secured to the studded tire 10 by side surfaces of the stud pin installation hole pressing and clamping onto part of the base 54 (see FIGS. 5 and 6).

The base 54 may include a bottom portion 58 and a cylindrical stump portion 56 radially interconnecting the bottom portion and the tip end 52. The bottom portion 58 is located at the radially opposite end of the tip end 52. The first stud 50 may thus be formed from the bottom portion 58, the stump portion 56, and tip end 52 in that radial ascending order.

FIG. 2 shows an external perspective view of a smaller second stud 150 for use with the present invention. The second stud 150 includes a radially outer spherical tip end 152 and a base 154 for partially inserting into corresponding recesses in the tread member 18. The base 154 is thus partially embedded inside a stud pin installation hole in the tread portion 18 of the studded tire 10 in which it is installed. The second stud 150 is secured to the studded tire 10 by side surfaces of the stud pin installation hole pressing and clamping onto part of the base 154 (see FIGS. 5 and 6).

The base 154 may include a bottom portion 158 and a cylindrical stump portion 156 radially interconnecting the bottom portion and the tip end 152. The bottom portion 158 is located at the radially opposite end of the tip end 152. The first stud 150 may thus be formed from the bottom portion 158, the stump portion 156, and tip end 152 in that radial ascending order.

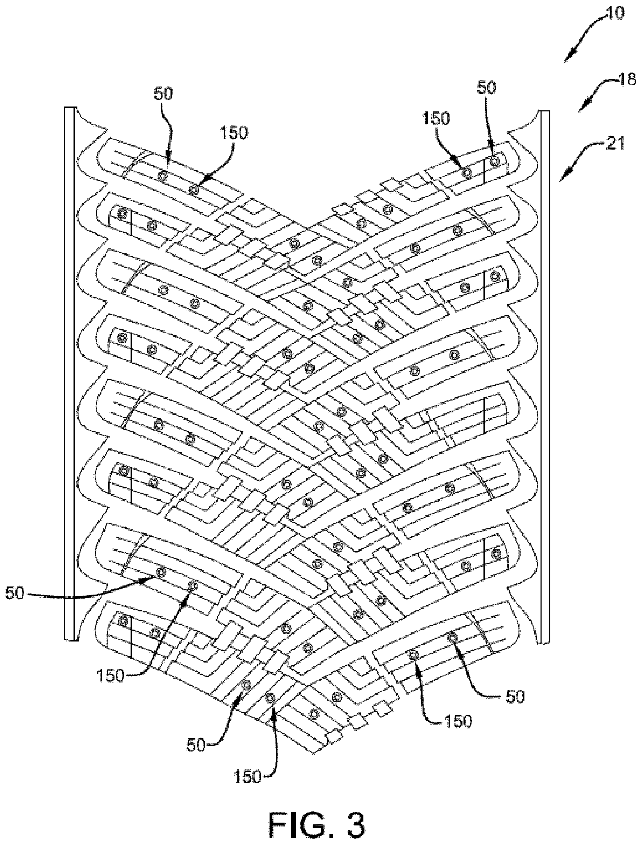

FIG. 3 shows a radial orthographic view of the tread portion 18 for use with a first arrangement 21 of the first and second studs 50, 150 of FIGS. 1 and 2 in accordance with the present invention. The first arrangement 21 provides pairs of studs, each pair having one first stud 50 and one second stud 150.

FIG. 4 shows a radial orthographic view of another tread portion 118 for use with a second arrangement 22 of the first and second studs 50, 150 of FIGS. 1 and 2 in accordance with the present invention. The second arrangement 22 provides triplets of studs, each triplet having three first studs 50 or three second studs 150. As shown in FIGS. 5 and 6, each triplet 50 or 150 may have the three studs 50 or 150 disposed at differing radial depths beneath a radially outer surface 122 of the tread 118. Further, the triplets may be disposed such that the tip ends 52 or 152 protrude radially outside of the mass of the tread portion 118 (FIG. 5).

Alternatively, the triplets may be disposed such that the tip end 52 or 152 of only the radially outer most studs 50 or 150 protrude radially outside of the mass of the unworn tread portion 118 (FIG. 6). The other two tip ends 52 or 152 may be at a radial depth such that the tip ends 52 or 152 are embedded in the mass of the tread portion 118 until the tread portion 118 wears over time and use of the studded tire 10. The arrangement 22 thus allows the radially inner studs 50 or 150 to take over as the radially outer studs are worn away. Thus, brand new effective studs 50 or 150 may appear at a certain mileage/wear of the tread 118.

The arrangements 21, 22 of such studs 50, 150, according to the present invention, have been described above in exemplary detail. However, a tire, a stud, and/or arrangement according to the present invention may be modified and given various substitutions in accordance with the scope of the claims.

## Claims

1. A tire tread having an arrangement (21, 22) of studs (50, 150) inserted into a tread portion (18, 118) of said tire tread, the arrangement (21, 22) comprising at least one or a first plurality of first studs (50) protruding from the unworn tread portion (18, 118) for contacting a road surface and at least one or a second plurality of second studs (150) embedded or inserted in the tread portion (18, 118), wherein the at least one or the second plurality of second studs (150) is embedded or inserted in the tread portion (18, 118) such that the radially outermost surfaces of the second studs (150) are recessed in the radial direction of the tire tread or the tire (10) versus the radially outermost surfaces of the first studs (50) and/or such that only the at least one or only the first plurality of first studs (50) protrude from the unworn tread portion (18, 118), **characterized in that**
(i) the first studs (50) have radially outermost flat tip ends (52) and the second studs (150) have radially outermost spherical tip ends (152), or wherein the first studs (50) have radially outermost spherical tip ends (152) and the second studs (150) have radially outermost flat tip ends (52); and/or
(ii) the first plurality of first studs (50) and the second plurality of second studs (150) have a differing construction.

2. The tire tread of claim 1 wherein the at least one second studs (150) protrude from the worn tread portion (18, 118) as the tread portion (18, 118) wears against the road surface.

3. The tire tread of at least one of the previous claims wherein the first studs (50) and/or the second studs (150) have a cylindrical stump portion (56, 156).

4. The tire tread of at least one of the previous claims further including at least one or a plurality of third studs embedded or inserted in the tread portion (18, 118), wherein the at least one or the plurality of third studs is embedded or inserted in the tread portion (18, 118) such that the radially outermost surfaces of the third studs are recessed in the radial direction of the tire tread or the tire (10) versus the radially outermost surfaces of the second studs (150); and/or that the third studs protrude from the worn tread portion (18, 118) as the tread portion (18, 118) wears against the road surface.

5. The tire tread of at least one of the previous claims wherein each of the second studs (150) is embedded at a first radial depth of the tread portion (18, 118).

6. The tire tread of at least one of the previous claims wherein the radially outermost surfaces of the second studs (150) are recessed in a range of from 0.5 to 3 mm, preferably 1 mm to 2 mm, in the radial direction of the tire tread or the tire (10) versus the radially outermost surfaces of the first studs (50).

7. The tire tread of at least one of the previous claims wherein each of the third studs is embedded at a second radial depth of the tread portion (18, 118), the second radial depth being different from the first radial depth.

8. The tire tread of at least one of the previous claims wherein the radially outermost surfaces of the third studs are recessed in a range of from 0.5 to 3 mm, preferably 1 mm to 2 mm, in the radial direction of the tire tread or the tire (10) versus the radially outermost surfaces of the second studs (150).

9. The tire tread of at least one of the previous claims comprising a first plurality of first studs (50) disposed at a first radial depth of the tire tread (18, 118), a second plurality of second studs (150) disposed at a second radial depth of the tire tread (18, 118), and, optionally, a third plurality of third studs disposed at a third radial depth of the tire tread (18, 118), the first radial depth being smaller than the second radial depth and, optionally, the second radial depth being smaller than the third radial depth.

10. The tire tread of at least one of the previous claims 1 to 9 wherein the first plurality of first studs (50), the second plurality of second studs (150), and the third plurality of third studs each have a differing construction.

11. A tire having a tread (18, 118) in accordance with at least one of the previous claims.

## Patentansprüche

1. Reifenlauffläche, die eine Anordnung (21, 22) von Spikes (50, 150) aufweist, die in einen Laufflächenabschnitt (18, 118) der Reifenlauffläche eingesetzt sind, wobei die Anordnung (21, 22) wenigstens einen oder erste mehrere erste Spikes (50), die aus dem nicht-abgefahrenem Laufflächenabschnitt (18, 118) zum Berühren einer Straßenoberfläche vorstehen, und wenigstens einen oder zweite mehrere zweite Spikes (150) umfasst, die in den Laufflächenabschnitt (18, 118) eingebettet oder eingesetzt sind, wobei die wenigstens ersten oder die zweiten mehreren zweiten Spikes (150) in den Laufflächenabschnitt (18, 118) derart eingebettet oder eingesetzt sind, dass die radial äußersten Oberflächen der zweiten Spikes (150) in der radialen Richtung der Reifenlauffläche oder des Reifens (10) gegenüber den radial äußersten Oberflächen der ersten Spikes (50) ausgespart sind, und/oder derart, dass nur der wenigstens eine oder nur die ersten mehreren ersten Spikes (50) aus dem nicht-abgefahrenem Laufflächenabschnitt (18, 118) vorstehen,
**dadurch gekennzeichnet, dass**
(i) die ersten Spikes (50) radial äußerste flache Spitzenenden (52) aufweisen und die zweiten Spikes (150) radial äußerste kugelförmige Spitzenenden (152) aufweisen, oder wobei die ersten Spikes (50) radial äußerste kugelförmige Spitzenenden (152) aufweisen und die zweiten Spikes (150) radial äußerste flache Spitzenenden (52) aufweisen; und/oder
(ii) die ersten mehreren ersten Spikes (50) und die zweiten mehreren zweiten Spikes (150) einen unterschiedlichen Aufbau aufweisen.

2. Reifenlauffläche nach Anspruch 1, wobei der wenigstens eine zweite Spike (150) aus dem abgefahrenem Laufflächenabschnitt (18, 118) vorsteht, wenn der Laufflächenabschnitt (18, 118) gegen die Straßenoberfläche abgefahren wird.

3. Reifenlauffläche nach wenigstens einem der vorhergehenden Ansprüche, wobei die ersten Spikes (50) und/oder die zweiten Spikes (150) einen zylindrischen Stumpfabschnitt (56, 156) aufweisen.

4. Reifenlauffläche nach wenigstens einem der vorhergehenden Ansprüche, die ferner wenigstens einen oder mehrere dritte Spikes beinhaltet, die in den Laufflächenabschnitt (18, 118) eingebettet oder eingesetzt sind, wobei die wenigstens ersten oder die mehreren dritten Spikes in den Laufflächenabschnitt (18, 118) derart eingebettet oder eingesetzt sind, dass die radial äußersten Oberflächen der dritten Spikes in der radialen Richtung der Reifenlauffläche oder des Reifens (10) gegenüber den radial äußersten Oberflächen der zweiten Spikes (150) ausgespart sind, und/oder dass die dritten Spikes aus dem abgefahrenem Laufflächenabschnitt (18, 118) vorstehen, wenn der Laufflächenabschnitt (18, 118) gegen die Straßenoberfläche abgefahren wird.

5. Reifenlauffläche nach wenigstens einem der vorhergehenden Ansprüche, wobei jeder der zweiten Spikes (150) in einer ersten radialen Tiefe des Laufflächenabschnitts (18, 118) eingebettet ist.

6. Reifenlauffläche nach wenigstens einem der vorhergehenden Ansprüche, wobei die radial äußersten Oberflächen der zweiten Spikes (150) in einem Bereich von 0,5 bis 3 mm, vorzugsweise 1 mm bis 2 mm, in der radialen Richtung der Reifenlauffläche oder des Reifens (10) gegenüber den radial äußersten Oberflächen der ersten Spikes (50) ausgespart sind.

7. Reifenlauffläche nach wenigstens einem der vorhergehenden Ansprüche, wobei jeder der dritten Spikes in einer zweiten radialen Tiefe des Laufflächenabschnitts (18, 118) eingebettet ist, wobei sich die zweite radiale Tiefe von der ersten radialen Tiefe unterscheidet.

8. Reifenlauffläche nach wenigstens einem der vorhergehenden Ansprüche, wobei die radial äußersten Oberflächen der dritten Spikes in einem Bereich von 0,5 bis 3 mm, vorzugsweise 1 mm bis 2 mm, in der radialen Richtung der Reifenlauffläche oder des Reifens (10) gegenüber den radial äußersten Oberflächen der zweiten Spikes (150) ausgespart sind.

9. Reifenlauffläche nach wenigstens einem der vorhergehenden Ansprüche, die erste mehrere erste Spikes (50), die in einer ersten radialen Tiefe der Reifenlauffläche (18, 118) eingerichtet sind, zweite mehrere zweite Spikes (150), die in einer zweiten radialen Tiefe der Reifenlauffläche (18, 118) eingerichtet sind, und optional dritte mehrere dritte Spikes umfasst, die in einer dritten radialen Tiefe der Reifenlauffläche (18, 118) eingerichtet sind, wobei die erste radiale Tiefe kleiner als die zweite radiale Tiefe ist und, optional, wobei die zweite radiale Tiefe kleiner als die dritte radiale Tiefe ist.

10. Reifenlauffläche nach wenigstens einem der vorhergehenden Ansprüche 1 bis 9, wobei die ersten mehreren ersten Spikes (50), die zweiten mehreren zweiten Spikes (150) und die dritten mehreren dritten Spikes jeweils einen unterschiedlichen Aufbau aufweisen.

11. Reifen, der eine Lauffläche (18, 118) nach wenigstens einem der vorhergehenden Ansprüche aufweist.

## Revendications

1. Bande de roulement pour un bandage pneumatique qui possède un arrangement (21, 22) de crampons (50, 150) qui sont insérés dans une portion de bande de roulement (18, 118) de ladite bande de roulement pour un bandage pneumatique, l'arrangement (21, 22) comprenant au moins un premier crampon ou une première multitude de premiers crampons de bande de roulement qui fait/font saillie par rapport à la portion non usée (18, 118) faisant office de bande de roulement à des fins de mise en contact avec une surface de route et au moins un deuxième crampon ou une deuxième multitude de deuxièmes crampons (150) qui est/sont encastré(s) ou inséré(s) dans la portion (18, 118) faisant office de bande de roulement ; dans laquelle ledit au moins un deuxième crampon ou ladite multitude de deuxièmes crampons (150) est/sont encastré(s) ou inséré(s) dans la portion (18, 118) faisant office de bande de roulement d'une manière telle que les surfaces des deuxièmes crampons (150) les plus externes dans la direction radiale sont évidées dans la direction radiale de la bande de roulement pour un bandage pneumatique ou du bandage pneumatique (10) par rapport aux surfaces des premiers crampons (50) les plus externes dans la direction radiale et/ou d'une manière telle que seulement ledit au moins un premier crampon ou seulement ladite première multitude de premiers crampons (50) fait/font saillie par rapport à la portion non usée (18, 118) faisant office de bande de roulement, **caractérisée en ce que**
(i) les premiers crampons (50) possèdent des extrémités de pointes (52) les plus externes dans la direction radiale de forme plate et les deuxièmes crampons (150) possèdent des extrémités de pointes (52) les plus externes dans la direction radiale de forme sphérique, ou dans laquelle les premiers crampons (50) possèdent des extrémités de pointes (52) les plus externes dans la direction radiale de forme sphérique et les deuxièmes crampons (150) possèdent des extrémités de pointes (152) les plus externes dans la direction radiale de forme plate ; et/ou
(ii) la première multitude de premiers crampons (50) et la deuxième multitude de deuxièmes crampons (150) possèdent une structure différente.

2. Bande de roulement pour un bandage pneumatique selon la revendication 1, dans laquelle ledit au moins un deuxième crampon (150) fait saillie par rapport à la portion usée (18, 118) faisant office de bande de roulement lorsque la portion (18, 118) faisant office de bande de roulement s'appuie contre la surface de la route.

3. Bande de roulement pour un bandage pneumatique selon au moins une des revendications précédentes, dans laquelle les premiers crampons (50) et/ou les deuxièmes crampons (150) possèdent une portion (56, 156) faisant office de souche, de forme cylindrique.

4. Bande de roulement pour un bandage pneumatique selon au moins une des revendications précédentes, qui comprend en outre au moins un troisième crampon ou une multitude de troisièmes crampons qui sont encastrés ou insérés dans la portion (18, 118) faisant office de bande de roulement ; dans laquelle ledit au moins un troisième crampon ou la multitude de troisièmes crampons est/sont encastré(s) ou inséré(s) dans la portion (18, 118) faisant office de bande de roulement d'une manière telle que les surfaces des troisièmes crampons les plus externes dans la direction radiale sont évidées dans la direction radiale de la bande de roulement pour un bandage pneumatique ou du bandage pneumatique (10) par rapport aux surfaces des deuxièmes crampons (150) les plus externes dans la direction radiale ; et/ou d'une manière telle que les troisièmes crampons font saillie par rapport à la portion usée (18, 118) faisant office de bande de roulement lorsque la portion (18, 118) faisant office de bande de roulement s'appuie contre la surface de la route.

5. Bande de roulement pour un bandage pneumatique selon au moins une des revendications précédentes, dans laquelle chaque crampon parmi les deuxièmes crampons (150) est encastré à une première profondeur radiale de la portion (18, 118) faisant office de bande de roulement.

6. Bande de roulement pour un bandage pneumatique selon au moins une des revendications précédentes, dans laquelle les surfaces des deuxièmes crampons (150) les plus externes dans la direction radiale sont évidées dans une plage allant de 0,5 à 3 mm, de préférence de 1 mm à 2 mm, dans la direction radiale de la bande de roulement pour un bandage pneumatique ou du bandage pneumatique (10) par rapport par rapport aux surfaces des premiers crampons (50) les plus externes dans la direction radiale.

7. Bande de roulement pour un bandage pneumatique selon au moins une des revendications précédentes, dans laquelle chaque crampon parmi les troisièmes crampons est encastré à une deuxième profondeur radiale de la portion (18, 118) faisant office de bande de roulement, la deuxième profondeur radiale étant différente de la première profondeur radiale.

8. Bande de roulement pour un bandage pneumatique selon au moins une des revendications précédentes, dans laquelle les surfaces des troisièmes crampons les plus externes dans la direction radiale sont évidées dans une plage allant de 0,5 à 3 mm, de préférence de 1 mm à 2 mm, dans la direction radiale de la bande de roulement pour un bandage pneumatique ou du bandage pneumatique (10) par rapport par rapport aux surfaces des deuxièmes crampons (150) les plus externes dans la direction radiale.

9. Bande de roulement pour un bandage pneumatique selon au moins une des revendications précédentes, qui comprend une première multitude de premiers crampons (50) qui sont disposés à une première profondeur radiale de la bande de roulement pour un bandage pneumatique (18, 118), une deuxième multitude de deuxièmes crampons (150) qui sont disposés à une deuxième profondeur radiale de la bande de roulement pour un bandage pneumatique (18, 118), et, de manière facultative, une troisième multitude de troisièmes crampons qui sont disposés à une troisième profondeur radiale de la bande de roulement pour un bandage pneumatique (18, 118), la première profondeur radiale étant inférieure à la deuxième profondeur radiale et, de manière facultative, la deuxième profondeur radiale étant inférieure à la troisième profondeur radiale.

10. Bande de roulement pour un bandage pneumatique selon au moins une des revendications 1 à 9, dans laquelle la première multitude de premiers crampons (50), la deuxième multitude de deuxièmes crampons (150), et la troisième multitude de troisièmes crampons possèdent chacune une structure différente.

11. Bandage pneumatique possédant une bande de roulement (18, 118) en conformité avec au moins une des revendications précédentes.
